# EUROPEAN PATENT APPLICATION

(11) **EP 4 254 444 A1**
(43) Date of publication of application: **04.10.2023**
(21) Application number: 22165533.5
(22) Date of filing: 30.03.2022
(51) Int. Cl.: H01F 27/02, H01F 27/22, H01F 37/00, H02M 3/00

(54) **POWER MAGNETIC COMPONENT**

(71) Applicant: Schaffner EMV AG, 4542 Luterbach (CH)
(72) Inventor: Granitsas, Stefanos Panagiotis, 4528 Zuchwil (SO) (CH)
(74) Representative: P&TS SA (AG, Ltd.)

(57) **Abstract**

A magnetic component having a core of a high-permittivity material with one or more apertures extending between two opposite faces of the core and filled with a thermal conductors of a non-magnetic insulator material. Preferably, the apertures extending between a flat side of the core in contact with a metallic housing and the space where the windings are laid, providing a short and direct path for heat transfer. The thermal conductors may be alumina or any suitable material.

## Description

### Technical domain

The present invention concerns a power magnetic component with improvements related to the cooling, and its uses. Embodiments of the invention relate to a ferrite-core transformer for a power converter or a battery charger as well as to an onboard battery charger for an electric or hybrid vehicle.

### Related art

Magnetic components are key elements of power electronics and are found in a wide range of applications in all industrial sectors. Inductors are used, among others, in filter, voltage converters and in power factor compensation.

Besides their electrical characteristics, magnetic components must also fulfil specifications for dimensions, heat dissipation, heat resistance, immunity to vibrations, and many other parameters. As a result, magnetic components are complex products that are difficult to design and customize to all the possible applications. In automotive applications, where magnetic components are increasingly common, these specifications are especially stringent.

A state-of the art magnetic component is the result of a trade-off between the desired nominal inductance value, the size, weight, and footprint dictated by the desired application, the choice of material, layout, and cooling.

All magnetic devices exhibit energy losses in the winding and in the magnetic circuit. Such losses may be caused by the winding's resistance, by hysteresis in the core, by eddy currents, or by any other form of inefficiency. In high-power applications, loss-generated heat must be evacuated from the magnetic assembly lest it impairs the performances of the inductor. The lower the thermal resistance between the inductor and the available heat sinks, the higher will be power rating and power density.

Applications to the automotive sector, as well as in other demanding areas, require superior manufacturability, reliability, resistance to mechanical shocks and vibrations in an extended temperature range, together with a precise control of the tolerances and low thermal drifts.

It is known to encapsulate magnetic components in a metallic housing filled with a curable potting compound. Potting protects the device from water, moisture and corrosion, adds resistance to shocks and vibration and, in some measure, improves the transmission of the heat generated in the device to the housing. Sometimes, in automotive applications, the housing has a flat bottom that is screwed on a cooled plate.

Biela, J., & Kolar, J. W. (2007). Cooling Concepts for Hight Power Density Magnetic Devices. Power Conversion Conference. Nagoya (doi: 10.1109/PCCON.2007.372915) discloses a theoretical comparison of several cooling methods.

Some known magnetic components use special thermal conductors to improve power dissipation. Thermal conductors may take the form of metallic elements, which are excellent conductors, but may be the seat of eddy currents which contribute to losses. US 4081776 A discloses a laminated core with a sleeve of thermally conductive ceramic close to the windings. Thermally conductive ceramic materials are disclosed also in US 4897626 A in association with magnetic toroids, in CN 107516581 A, mounted on a winding support, and in CN 20857027 U1 in the form of a ceramic element between two ferrite semi-cores.

US 7212406 B2 discloses a magnetic component with non-magnetic passageways in the core that allow the flow or a fluid cooling medium, while US 2016/0064134 A1 discloses a transformer with stacked windings and, between primary and secondary, a heat-dissipating metallic panel.

Conductive ceramics are rather expensive to produce in custom shapes; moreover, in known solutions, the heath path between the source of the losses and the heat sink is rather long, and the thermal resistance is undesirably high.

### Short disclosure of the invention

An aim of the present invention is the provision of a power magnetic component that uses thermally conductive insulator elements in a new and more effective way. Compared to known devices, the magnetic components of the invention run at lower temperature and are more economical to produce.

According to the invention, these aims are attained by the object of the attached claims, and especially by a magnetic component having a magnetic core of a high-permittivity material forming a magnetic circuit, wherein the core has at least one aperture extending between two opposite faces of the core and the aperture is filled with a thermal conductors of a non-magnetic insulator material.

Dependent claims relate to features that, while being important and useful, are not essential, such as the winding or windings concatenated with the magnetic circuit, or the shape of the core that may be a pot core with a flat side and a concavity for lodging the winding, the apertures extending between the flat side and a bottom side of the concavity, and the flat side abuts against a metallic housing.

Other desirable features include that the thermal conductors may extend above the bottom side of the concavity into the space filled by potting compound to increase the thermal contact with the windings, and optionally provide a mechanical support to the winding themselves. In some variants, the thermal conductors may be completed by additional elements to provide a coil former or a bobbin on which the winding(s) are wound.

The core may be a ferrite core or powdered metal core, and the thermal conductivity of the inserts should be above that of the high-permeability material, for example above 5 W/m·K, preferably above 10 W/m·K or better above 20 W/m·K. Such values can be obtained using pure sintered alumina (Al₂O₃) or Al₂O₃-rich ceramic materials, for example.

Other materials with high thermal conductivity exist and may be applied to the invention, pure or mixed to other components, possibly in the form of sintered ceramic. Beside alumina, these materials include boron nitride, aluminium nitride, silicon carbide, beryllium oxide and exotic materials like diamond and graphene. The list is not exhaustive.

The thermal conductor could also be a composite including particles of a high-conductivity material, for example one of the above, dispersed in a suitable matrix. The matrix could be an organic polymer, a thermoplastic, a thermoset, a silicon polymer, or any suitable organic or inorganic binder.

With respect to what is known in the art, the invention provides a superior evacuation of the heat losses and is particularly suitable to installations on a cooled plate, where the heat conductors of the invention are strategically placed to conduct the heat toward the cooled plate along the shortest possible path. It can be applied to transformers, inductors, chokes and multiphase components alike. An important use case of the invention is in onboard chargers for electric and hybrid vehicles, but many other applications are possible.

### Short description of the drawings

Exemplar embodiments of the invention are disclosed in the description and illustrated by the drawings in which:
Figures 1a-1c illustrates schematically a magnetic component of known type with a ceramic plate providing a heat path around the magnetic core.
Figures 2a-2d show a possible realization of the inventive magnetic component.
Figure 3 shows a variant of the inventive component with thermal conductors extending above the core into the potting compound.
Figure 4 shows a variant of the invention involving a core of a different shape

### Examples of embodiments of the present invention

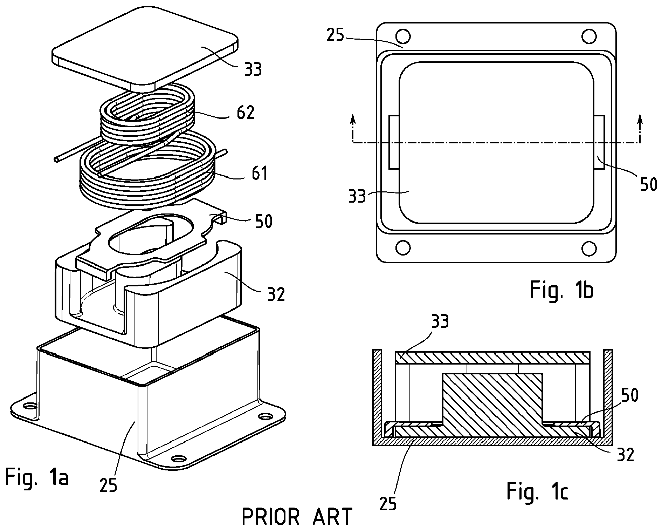

**Figure 1a** represents a magnetic transformer with a gapped core, suitable for use in certain classes of DC-DC converters and battery chargers. The transformer is represented with the components exploded, omitting the potting compound that is poured in the housing in a final assembly step.

The transformer represented in the figures can be used, for example in a power converter or in a battery charger. On-board battery chargers for electric and hybrid vehicles are an important use case of the present invention, but not the only one. The invention can be applied also to filters, power factor converters, and any application of magnetic components where high power density is desired.

The transformer is mounted in a metallic housing 25, for example a cast aluminium element. The housing has a receptacle that is configured to contain the transformer and a flat base designed to be fastened to a flat plate. The plate may be cooled by water, forced air or natural air convection.

The winding or windings 61, 62 are inserted in the magnetic core 32 around the central leg and the magnetic circuit is completed by the lid 33. A heat-conducting ceramic plate 50 adds a thermal path that improves the transmission of heat from the windings to the bottom of the housing and thence to the cooled plate. **Figures 1b and 1c** show the same assembly from above and in section, the windings 61, 62 and the potting having been omitted for simplicity. The core 32 can comprise any suitable magnetic material such as a ferrite or powdered iron. Ferrites are the material of choice in high-performance power converters operating at carrier frequencies of hundreds of kHz or more. Ferrites suitable to use in the present invention can be obtained commercially by the company "Ferroxcube" under the denomination "3C92" among others, but many other producers and grades are available.

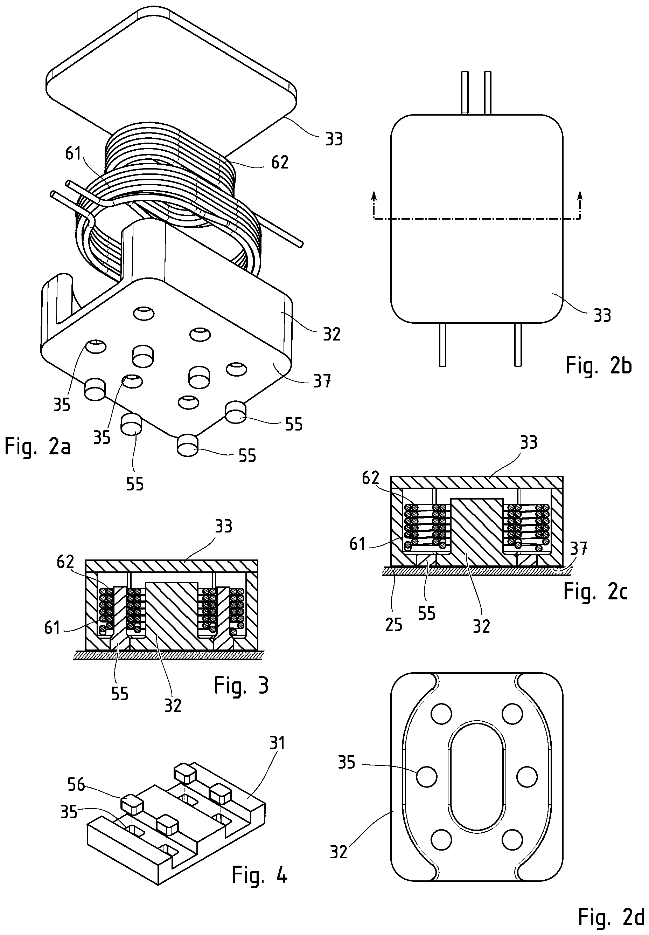

**Figure 2a** shows a magnetic component according to the invention. The core 32 has opening 35 that traverse a thickness of the core and connect one flat face 37 of the core with an inner face, adjacent to the windings 61, 62. The openings 35 are filled by plugs 55 of a thermally conducting nonmagnetic material. Preferably, the thermal conductivity of the material chosen for the plugs 35 is sensibly more than the thermal conductivity of the magnetic material composing the main part of the core 32, for example heat conducting ceramic with a thermal conductivity higher than 5 W/mK, preferably 10 W/mK or higher. Al₂O₃ with thermal conductivities better than 20 W/mK is available and suitable for the present invention. Other technical materials that could be used for this purpose include Silicon Carbide, Boron Nitride and diamond.

Ceramic materials are attractive choices for the thermal plugs 55 because they resist to very high temperatures and their coefficient of thermal expansion is quite small; nevertheless, they are not the only choice possible. The thermal plugs 55 could be made out any suitable insulator with a thermal conductivity higher than that of the surrounding ferrite. This includes, among others, composite materials with a thermally conductive phase in a matrix. The matrix could be a silicone polymer, or an organic polymer or any other suitable binder. Thermally conductive composites and thermally conductive plastics are inexpensive and easy to manufacture in complex shapes.

**Figure 2b** shows the magnetic device of the invention from the top. **Figure 2c** is a cross section that shows the core 32 alone with the openings 35 in the bottom of the receptacle that is designed to receive the windings 61, 62. In the finished product, the lower flat side 37 of the core 32 will sit directly on the bottom of the aluminium casing 25 that is fastened on a cooled plate, as in figures 1a-1c. The plugs 55 provide a direct and short path to dissipate the heat generated by the losses, particularly the losses in the windings.

**Figure 2d** shows the core 32 from above, with a recess configured to accept the windings, which are not drawn in this figure, around a central column. The openings 35 lie on the bottom of the recess and provide a direct path to the flat underlying face. This disposition is advantageous because, on one side, the length of the heat path is limited and, on the other side, the effects of the apertures on the reluctance and the maximum flux density of the magnetic circuit are moderate.

**Figure 3** illustrates a variant in which the heat conductors 55 are not entirely contained in the thickness of the core 32 but extend in the space above, providing both a thermal contact and a mechanical support to the windings 61, 62.

The previous example shows a transformer with two coupled windings and an air gap in the magnetic circuit; nevertheless, the invention is not so limited, and may include plain inductors with a single winding, common-mode chokes with two coupled windings, conventional transformers without air gaps, power-factor correction impedances, multiphase devices with multiple windings and more.

While the examples represent a pot core of a special shape, magnetic cores come in a large variety of shapes, and the present invention applies to all shapes. The invention includes variants in which the core is made by two symmetrical halves, rather than a deep pot closed by a flat lid, and other shapes like "C" cores, "E" cores and many others. **Figure 4** represents a possible implementation of the invention in a ferrite core 31 with an "E" shape. In contrast with the example of figures 2a-2d that had cylindrical conductors 55, the thermal inserts 56 of figure 3 are prismatic. According to the need, the thermal inserts could assume any suitable shape.

### Reference symbols in the figures

- 25: housing
- 31: "E" core
- 32: pot core
- 33: core lid
- 35: opening
- 37: flat face
- 50: thermal plate
- 55: thermal conductor, cylindrical
- 56: thermal conductor, prismatic
- 61: winding
- 62: winding

## Claims

1. A magnetic component having a core (32, 33) of a high-permittivity material forming a magnetic circuit, wherein the core has at least one aperture (35) extending between two opposite faces of the core and filled with a thermal conductor (55) of a non-magnetic insulator material.

2. The magnetic component of the preceding claim comprising at least one winding (61, 62) concatenated with the magnetic circuit.

3. The magnetic component of the preceding claim, wherein the core is a pot core (32) with a flat side (37) and a concavity for lodging the winding therein, the apertures (35) extending between the flat side (37) and a bottom side of the concavity, the core and the winding being potted in a metallic housing (25), the flat side (37) abutting a flat bottom of the housing.

4. The magnetic component of the preceding claim, wherein the thermal conductors (55) extend above the bottom side of the concavity and are partly surrounded by potting compound.

5. The magnetic component of the preceding claim, wherein the thermal conductors (55) are in thermal contact with the winding (61, 62) and support mechanically the windings.

6. The magnetic component of any one of the preceding claims wherein the core is a ferrite core or powdered metal core, and the thermal conductors are one of: Alumina, a AI203 composite, ceramic, Boron Nitride, a BN composite, Silicon Carbide.

7. The magnetic component of any one of the preceding claims, wherein a thermal conductivity of the thermal conductors is higher than a thermal conductivity of the high-permittivity material, preferably above 5 W/m·K, more preferably above 10 W/m·K, even more preferably above 20 W/m·K.

8. Use of the magnetic component of any one of the preceding claims in a power converter or in a battery charger.

9. The magnetic component of any one of the preceding claims configured as a transformer with two magnetically coupled windings.
